# EUROPEAN PATENT SPECIFICATION

(11) **EP 4 727 202 B1**
(45) Date of publication and mention of the grant of the patent: **09.12.2026**
(21) Application number: 24205339.5
(22) Date of filing: 08.10.2024
(51) Int. Cl.: H04W 24/04

(54) **METHOD, USER EQUIPMENT, SYSTEM OR TELECOMMUNICATIONS NETWORK, PROGRAM AND COMPUTER-READABLE MEDIUM FOR REALIZING NON-ACCESS STRATUM COMMUNICATION BETWEEN A USER EQUIPMENT AND AT LEAST ONE OF A PLURALITY OF NETWORK FUNCTIONS OR SERVICES OF A TELECOMMUNICATIONS NETWORK**
VERFAHREN, BENUTZERGERÄT, SYSTEM ODER TELEKOMMUNIKATIONSNETZ, PROGRAMM UND COMPUTERLESBARES MEDIUM ZUR REALISIERUNG EINER KOMMUNIKATION AUF NICHT-ZUGRIFFSEBENE ZWISCHEN EINEM BENUTZERGERÄT UND MINDESTENS EINER VON MEHREREN NETZWERKFUNKTIONEN ODER DIENSTEN EINES TELEKOMMUNIKATIONSNETZES
PROCÉDÉ, ÉQUIPEMENT UTILISATEUR, SYSTÈME OU RÉSEAU DE TÉLÉCOMMUNICATIONS, PROGRAMME ET SUPPORT LISIBLE PAR ORDINATEUR POUR RÉALISER UNE COMMUNICATION HORS COUCHE D'ACCÈS ENTRE UN ÉQUIPEMENT UTILISATEUR ET AU MOINS UNE D'UNE PLURALITÉ DE FONCTIONS OU DE SERVICES DE RÉSEAU D'UN RÉSEAU DE TÉLÉCOMMUNICATIONS

(43) Date of publication of application: 15.04.2026
(73) Proprietor: Deutsche Telekom AG, 53113 Bonn (DE)
(72) Inventor: COLOM IKUNO, Josep, 2100 Korneuburg (AT)
(74) Representative: Schwöbel, Thilo K.

(56) References cited:
- WO-A2-2024/026028
- US-A1- 20240 056 932

## Description

### BACKGROUND

The present invention relates a method for realizing non-access stratum communication between a user equipment and at least one of a plurality of network functions or services of a telecommunications network that comprises, or is associated with, an access network and a core network, wherein the non-access stratum communication involves a first non-access stratum communication link between the user equipment and a first network function or service of the plurality of network functions or services, and a second non-access stratum communication link between the user equipment and a second network function or service of the plurality of network functions or services.

Furthermore, the present invention relates to a user equipment for realizing non-access stratum communication between a user equipment and at least one of a plurality of network functions or services of a telecommunications network that comprises, or is associated with, an access network and a core network, wherein the non-access stratum communication involves a first non-access stratum communication link between the user equipment and a first network function or service of the plurality of network functions or services, and a second non-access stratum communication link between the user equipment and a second network function or service of the plurality of network functions or services.

Additionally, the present invention relates to a system or to a telecommunications network for realizing non-access stratum communication between a user equipment and at least one of a plurality of network functions or services of a telecommunications network that comprises, or is associated with, an access network and a core network, wherein the non-access stratum communication involves a first non-access stratum communication link between the user equipment and a first network function or service of the plurality of network functions or services, and a second non-access stratum communication link between the user equipment and a second network function or service of the plurality of network functions or services.

Furthermore, the present invention relates to a program and to a computer-readable medium for realizing, according to the inventive method, non-access stratum communication between a user equipment and at least one of a plurality of network functions or services of a telecommunications network.

In conventionally known telecommunications networks, the interface used between the user equipment, going via the access network (such as a radio access network, RAN), on the one hand, and the core network (CN), is based on the non-access stratum protocol stack, or NAS protocol stack. From a system architecture perspective, NAS communication refers to the logical interface between the user equipment and the core network.

Furthermore, in conventionally known telecommunications networks, the (radio) access network determines - regarding non-access stratum communication - the AMF network function or service (out of, potentially, a plurality of different (instances of) AMF network functions or services within a telecommunications network) with which to communicate with based on different configuration parameters. The non-access stratum communication relates to control plane information exchanged between the UE and CN elements or network nodes of the core network: E.g., in the case of a 5G system, that includes communication between the user equipment and a plurality of different network function functionalities, such as, e.g., AMF (for access and mobility), SMF (for session management), PCF (for policy information), and LMF (for location information). Thereby, the access and mobility management function serves as a central element for the non-access stratum communication between the user equipment and the (other kinds of) network functions or services of the core network (i.e. the different network function functionalities).

In the example of a mobile communication network - especially a mobile communication network according to the 6G standard -, disaggregated NAS, that is, direct NAS communication between the user equipment and different network functions (NFs) is currently being evaluated. While there are advantages to this approach, e.g. lower latency, better functional separation, easier implementation of more different scenarios, disaggregating the NAS interface results in new challenges that need a solution, such as the need to account for partial NAS instance failures. Currently, there is only the possibility of a total NAS failure, which happens in case the access and mobility management function (AMF) goes down; currently, the access and mobility management function terminates the non-access stratum (NAS) protocol between the user equipment and the core network (CN).

Document WO 2024/026028 A2 describes a system for configuring and reporting parameters related to deterministic networks (DetNet) within a 5G architecture, where a wireless device communicates with a network function (AMF) to send structured reports that facilitate real-time network configuration and performance monitoring and document US 2024/0056932 A1 describes methods for handling network failure scenarios in disaster-affected areas, enabling a wireless device to register with a different public land mobile network (PLMN) and maintain connectivity by including disaster-related information in registration messages. However, neither D1 nor D2 addresses the problem of detecting and managing non-access stratum (NAS) communication failures between a user equipment and multiple network functions.

### SUMMARY

An object of the present invention is to provide a technically simple, effective and cost effective solution for realizing non-access stratum communication between a user equipment and at least one of a plurality of network functions or services of a telecommunications network, wherein the non-access stratum communication involves a first non-access stratum communication link between the user equipment and a first network function or service, and a second non-access stratum communication link between the user equipment and a second network function or service, wherein especially support for partially degraded non-access stratum communication between the user equipment and the core network is provided. A further object of the present invention is to provide a corresponding user equipment, a corresponding system or telecommunications network, and a corresponding program and computer-readable medium.

The object of the present invention is achieved by a method according to claim 1.

According to the present invention, it is advantageously possible that a disaggregated non-access stratum communication is able to be realized in a reliable manner such that even a partial failure of the non-access stratum communication is able to be handled. Hence, and as opposed to current systems, especially fifth generation systems, a non-access stratum communication failure need not result in a total failure of non-access stratum communications. Rather, the present invention allows non-access stratum communication failures, such as those caused by instance failures and/or connectivity issues, to be contained and its effects minimized. According to the present invention, it is advantageously possible to continue the non-access stratum communication even though a failure occurs to one of the disaggregated non-access stratum endpoints (such as, e.g., the access and mobility management function). Hence, it is advantageously possible, according to the present invention, that a disaggregation of the non-access stratum and/or of the access and mobility management function is possible, especially by means of replacing the function of the access and mobility management function as being a single point of termination for the non-access stratum protocol and non-access stratum security context, such that the user equipment is capable of directly communicating with control plane elements (of the core network). Thus, according to the present invention, it is assumed that a user equipment has a plurality of security contexts established (towards different network functions (or services) of the core network). This might especially be relevant in an implementation in accordance of a sixth generation mobile communication network (6G) (or higher than 6G generation mobile communication network). Thus, it is advantageously possible, according to the present invention, that the user equipment might have a first non-access stratum communication link between the user equipment and a first network function or service, and a second non-access stratum communication link between the user equipment and a second network function or service. Additionally, it might even be possible that the user equipment has a further, or third, non-access stratum communication link towards still a further network function or service. In this respect, the first network function or service might be an access and mobility management function, and the respective (first) non-access stratum communication link a non-access stratum mobility management (NAS-MM) interface, the second network function or service might be a session management function, and the respective (second) non-access stratum communication link a non-access stratum session management (NAS-SM) interface, the third network function or service might be a policy control function, and the respective (third) non-access stratum communication link a non-access stratum policy (NAS-P) interface. All these non-access stratum communication links realize control plane interfaces between the user equipment, via the radio access network (i.e. a base station entity, e.g. a gNB), towards the respective network functions or services, whereas - in addition thereto - the user equipment is typically also connected (likewise via the radio access network, i.e. the base station entity), via an N3 interface of reference point, towards a user plane function (UPF), thus realising a user plane interface; in this context, the user plane function is typically connected via an N6 interface or reference point towards a data network, e.g. the internet.

According to the present invention, non-access stratum disaggregation is able to be realized by means of a real separation between access and mobility (AM, or the access and mobility management function) and session management (SM, or session management function. In conventionally known mobile networks, AM and SM are intertwined by virtue of the access and mobility management function (AMF) being the non-access stratum termination point. Among the non-access stratum functionality it provides, the access and mobility management function terminates the stream control transmission protocol layer used for non-access stratum transport, the non-access stratum security context, access and mobility containers and forwards other non-access stratum containers via a different control plane stack. Realizing the non-access stratum functionality according to a truly disaggregated manner (i.e. disaggregated non-access stratum on the network side) enables more flexible deployments (e.g. in a 6G network or beyond 6G network), a reduction of control plane latency due to the direct forwarding of the non-access stratum communication to its final destination, as well as a consistent transport of non-access stratum information elements, such that non-access stratum information elements are transported via the same protocol stack. Specifically, the present invention focuses on failure cases that might arise in such a disaggregated realization or implementation of the non-access stratum functionality, especially the case that the access and mobility management function goes down.

In a conventionally known communication network (e.g. a 5G network - i.e. without non-access stratum disaggregation), if the non-access stratum termination point fails, all control plane communication (of the user equipment) with the core network ceases, which inevitably leads to the user equipment considering the control plane connection to the network as dead (as all control plane signaling ceases and no control plane element is reachable) and the eventual triggering of a network reselection, including the release of all associated user plane sessions, which results in a loss and/or interruption of service for the subscriber. In this case, the need for reliable service results corresponds to the need for maximum reliability for the access and mobility management function because if the access and mobility management function (being responsible for a user equipment) is gone (i.e. in failure), so do all of the services this user equipment is using. This results in the reliability required by access and mobility management function being the maximum of the reliability of any services used by the user equipment.

In contrast to that, in a disaggregated non-access stratum architecture according to the present invention, each service (i.e. each network function or service) is directly communicating with the user equipment and thus can be deployed based on different availability criteria.

However, while from a high-level perspective such flexibility enables independent access and mobility management (AM) and session management (SM) operation, according to the present invention, it is advantageously possible that an inter-NAS awareness is able to be realized that is able to support failure scenarios.

E.g. in a scenario where a failure of an access and mobility management function (AMF) happens, such failure will result into a degradation of access and mobility, which implies that:
-- the corresponding user equipment may not be able to (re-) register to the network,
-- the user equipment may not be able to move between tracking areas (TAs) and/or registration areas (RAs) (intra-TA mobility is managed by the radio access network and, thus, is not visible to the core network; hence such intra-TA mobility would not be impacted).

However, some control plane elements (such as, e.g. and typically, the session management function and the policy control function) are still reachable.

According to the present invention, it is advantageously possible that the overall functionality is aware of the limitations due to the failure (in, exemplarily, the access and mobility management function).

Especially, according to the present invention, it is advantageously possible that the following scenarios are able to be addressed when such a disaggregated non-access stratum communication is realized:
-- if the access and mobility management function fails, mobility out of a given tracking area/registration area is not possible; mobility requires coordination with an access and mobility management function (AMF), e.g. it is proposed to use of the general registration procedure with reason "mobility"; without mobility management, it is not possible to establish connectivity for sessions in preparation of or after the mobility event.
-- If the session management function fails, unless the user equipment or the radio access network (or base station entity, e.g. a gNB) are provided with means of having an alternative session management function or to select a new session management function that can overtake the functionality, the session will be lost.
-- if the policy control function fails, managing of differentiated QoS, especially the steering of said functionality is not possible for all sessions depending on that policy control function; furthermore, managing of user equipment policies (e.g. URSP rules - user equipment route selection policy rules) will not be possible with a given user equipment.

Typically, the telecommunications network comprises a plurality of network functions or services, and these network functions or services are able to provide different kinds of network function functionalities - within the telecommunications network, but also to, or towards, the user equipment. According to the present invention, the non-access stratum communication involves a first non-access stratum communication link between the user equipment and a first network function or service of the plurality of network functions or services, and at least a second non-access stratum communication link between the user equipment and a second network function or service of the plurality of network functions or services. Typically, the first non-access stratum communication link is between the user equipment and an access and mobility management function instance, whereas the second non-access stratum communication link is between the user equipment and another network function or service, e.g. the session management function. However, the assignment of which one of the plurality of non-access stratum communication links is considered the "first" one and which the "second" one is arbitrary, and, especially, is not necessarily related to, e.g., the chronological order of establishment of the respective non-access stratum communication links.

In case of a failure of the first non-access stratum communication link, the method comprises at least one of the following steps:
-- the user equipment sends a non-access stratum service degradation indication to one or a plurality of the plurality of network functions or services,
-- one or a plurality of the plurality of network functions or services send a non-access stratum service degradation indication to the user equipment,
-- one of the plurality of network functions or services sends a non-access stratum service degradation indication to another of the plurality of network functions or services,
-- one of the plurality of network functions or services sends a non-access stratum service degradation indication to the access network, especially to the base station entity serving the user equipment,
-- the user equipment or a network node or network element of the core network or of the access network is pre-configured with a non-access stratum service degradation indication associated with a given non-access stratum failure event, and uses the pre-configured non-access stratum service degradation indication or parts thereof.

According to the present invention, it is furthermore advantageously possible and preferred that, in case of a restoration of the first non-access stratum communication link, the method furthermore comprises at least one of the following steps:
-- the user equipment sends a non-access stratum service restoration indication to one or a plurality of the plurality of network functions or services,
-- one or a plurality of the plurality of network functions or services send a non-access stratum service restoration indication to the user equipment,
-- one of the plurality of network functions or services sends a non-access stratum service restoration indication to another of the plurality of network functions or services,
-- one of the plurality of network functions or services sends a non-access stratum service restoration indication to the access network, especially to the base station entity serving the user equipment,
-- the user equipment or a network node or network element of the core network or of the access network is pre-configured with a non-access stratum service restoration indication associated with a given non-access stratum failure event, and uses the pre-configured non-access stratum service restoration indication or parts thereof.

It is thereby advantageously possible to realize and implement the inventive method in a comparatively simple and efficient manner: By means of using both the non-access stratum service degradation indication and the non-access stratum service restoration indication, an efficient communication regarding failure - and, also, regarding the end of a failure situation - is possible.

According to the present invention, it is furthermore advantageously possible and preferred that a further, or third, non-access stratum communication link is established, between the user equipment and a further network function or service of the plurality of network functions or services.

It is thereby advantageously possible to realize and implement the inventive method in a comparatively simple and efficient manner.

Furthermore, it is advantageously possible and preferred according to the present invention that the non-access stratum service degradation indication
-- is sent via the second non-access stratum communication link, or via the further non-access stratum communication link,
-- is associated with a specific non-access stratum security context between the user equipment and a predefined network function or service of the plurality of network functions or services,
wherein especially the non-access stratum service restoration indication is sent via the first non-access stratum communication link, or via the second non-access stratum communication link, or via the further non-access stratum communication link.

It is thereby advantageously possible to efficiently realize and implement the inventive method in a comparatively simple and efficient manner.

Furthermore, it is advantageously possible and preferred according to the present invention that the non-access stratum service degradation indication comprises at least one out of the following:
-- an indication of the non-access stratum service, or plurality thereof, that failed,
-- an indication of an instance or of an endpoint of a network function or service, especially of an instance or of an endpoint of a non-access stratum network function or service, that failed,
-- an indication of a specific functionality that is degraded, especially referring to mobility, session management, policy management, especially session-related policy, user equipment-related policy, especially referring to specific sessions, PDU sessions, radio cell, groups of radio cells, tracking areas, registration areas, wherein especially the indication of a specific functionality that is degraded refers to a session management function terminating a PDU session when being notified of an incoming mobility event such as incoming loss of coverage,
-- an indication of an alternative instance or endpoint to contact,
-- an indication regarding an expected time to recovery, especially a time-span and/or a point in time.

It is thereby advantageously possible to efficiently realize and implement the inventive method in a comparatively simple and efficient manner.

Furthermore, it is advantageously possible and preferred according to the present invention that the non-access stratum service restoration indication comprises at least one out of the following:
-- an indication of the non-access stratum service, or plurality thereof, that is/are, or have been, restored,
-- an indication of an instance or of an endpoint of a network function or service, especially of an instance or of an endpoint of a non-access stratum network function or service, that is/are, or has/have been, restored,
-- an indication of a specific functionality that recovered, especially referring to mobility, session management, policy management, especially session-related policy, user equipment-related policy, especially referring to specific sessions, PDU sessions, radio cell, groups of radio cells, tracking areas, registration areas.

It is thereby advantageously possible to realize and implement the inventive method in a comparatively simple and efficient manner.

Furthermore, it is advantageously possible and preferred according to the present invention that, in case of a failure of the first non-access stratum communication link and/or upon reception of a non-access stratum service degradation indication, the user equipment indicates, to higher, or more user-centric, layers of the user equipment - especially to the user of the user equipment, especially via a notification of the display of the user equipment -, the non-access stratum service degradation, especially in case that the data session(s) cannot be maintained in the case of mobility.

It is thereby advantageously possible to realize and implement the inventive method in a comparatively simple and efficient manner.

Furthermore, the present invention relates to a user equipment according to claim 9.

Furthermore, the present invention relates to a system or to a telecommunications network according to claim 10.

Additionally, the present invention relates to a program according to claim 11.

Additionally, the present invention relates to a computer-readable medium according to claim 12.

These and other characteristics, features and advantages of the present invention will become apparent from the following detailed description, taken in conjunction with the accompanying drawings, which illustrate, by way of example, the principles of the invention. The description is given for the sake of example only, without limiting the scope of the invention. The reference figures quoted below refer to the attached drawings.

### BRIEF DESCRIPTION OF THE DRAWINGS

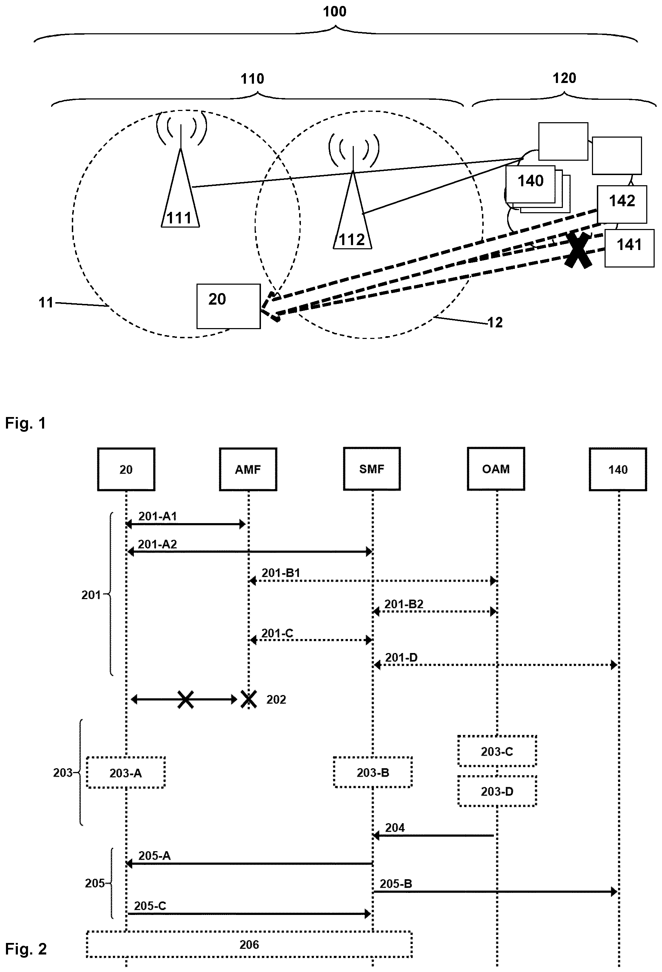

Figure 1 schematically illustrates a telecommunications network comprising an access network, a core network and a user equipment, wherein the core network typically comprises a number of network functions or services, such as an access and mobility management function, and other network functions or services, wherein the user equipment has established a plurality non-access stratum communication links to different network functions or services of the core network with a failure in one of these non-access stratum communication links.
Figure 2 schematically illustrates the communication between the user equipment, an access and mobility management function, a session management function, an operations and maintenance function, and an unspecified other network function or service of the core network in case of a failure situation of - exemplarily - the access and mobility management function.

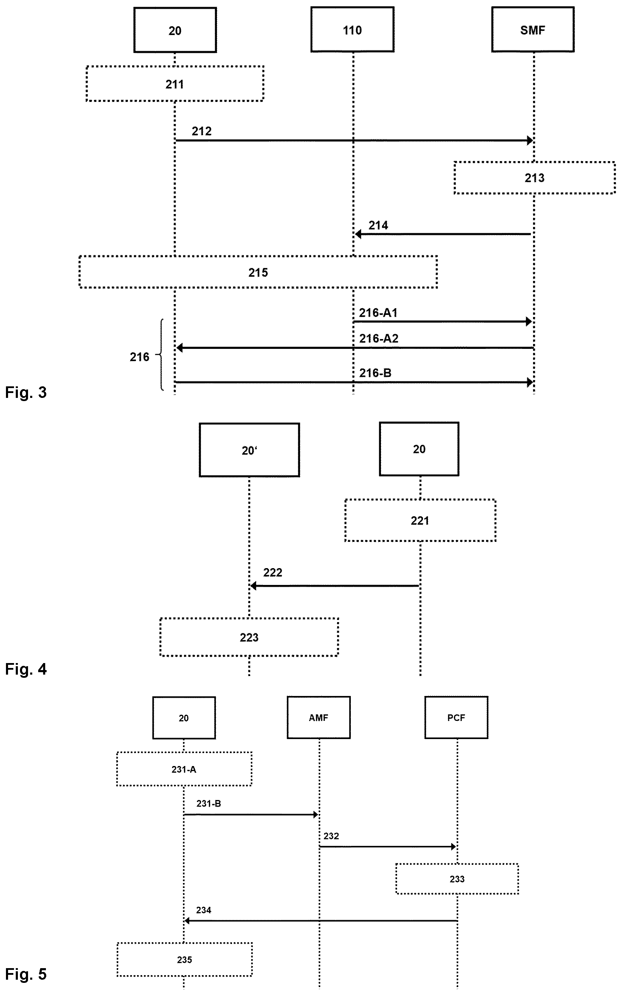

Figure 3 schematically illustrates a communication diagram between the user equipment, the radio access network, and the session management function showing user equipment triggered packet data unit (PDU) session modification as a result of the exemplary failure situation of the access and mobility management function.
Figure 4 schematically illustrates a communication diagram between the user equipment and an application (or the user itself) of the user equipment showing the influence of the failure situation on user and/or application behavior.
Figure 5 schematically illustrates the communication between the user equipment, the access and mobility management function, and a policy control function in case of a failure situation of - exemplarily - the session management function.

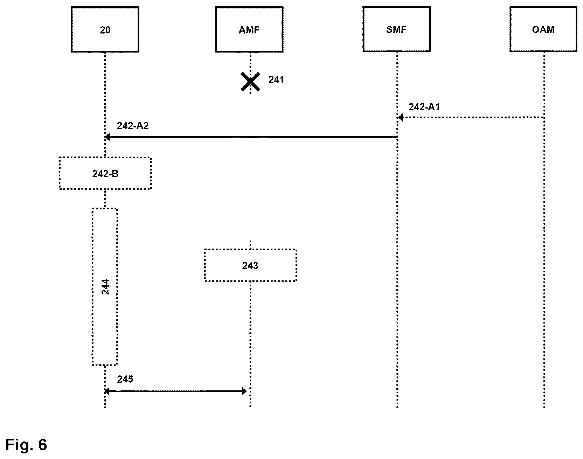

Figure 6 schematically illustrates the communication between the user equipment, an access and mobility management function, a session management function, and an operations and maintenance function - in case of a failure situation of, exemplarily, the access and mobility management function - regarding a recovery timer being related to a non-access stratum service failure (or degradation).

### DETAILED DESCRIPTION

The present invention will be described with respect to particular embodiments and with reference to certain drawings, but the invention is not limited thereto but only by the claims. The drawings described are only schematic and are non-limiting. In the drawings, the size of some of the elements may be exaggerated and not drawn on scale for illustrative purposes.

Where an indefinite or definite article is used when referring to a singular noun, e.g. "a", "an", "the", this includes a plural of that noun unless something else is specifically stated.

Furthermore, the terms first, second, third and the like in the description and in the claims are used for distinguishing between similar elements and not necessarily for describing a sequential or chronological order. It is to be understood that the terms so used are interchangeable under appropriate circumstances and that the embodiments of the invention described herein are capable of operation in other sequences than described or illustrated herein.

In Figure 1, a telecommunications network 100 comprising an access network 110, and a core network 120 is schematically shown. In Figure 1, the telecommunications network 100 is schematically shown as a mobile communication network 100, typically a cellular mobile communication network 100. However, the telecommunications network 100 might also be realized - at least in part - as a fixed-line telecommunications network 100 (not shown). The telecommunications network 100, especially the core network 120, typically comprises a number of network functions or services 140. Among the network functions or services 140, there might be different (kinds of) network functions or services, i.e. network functions or services providing different network function functionalities, such as, e.g., the access and mobility management function (AMF), the session management function (SMF), the policy control function (PCF), the location management function (LMF), and the operations and maintenance (function). The access network 110 comprises a plurality of radio cells 11, 12. In the exemplary situation or scenario shown in Figure 1, a first base station entity 111 generates or is associated with or spans the first radio cell 11, and a second base station entity 112 generates or is associated with or spans the second radio cell 12. A user equipment 20 is schematically shown, in Figure 1, as part of or within the radio coverage area of the first radio cell 11/first base station entity 111.

The user equipment 20 is typically, but not necessarily, mobile i.e. able to move with respect to the (typically, but not necessarily, static) radio cells 11, 12 or corresponding base station entities 111, 112 of the access network 110. In the exemplarily represented illustration of Figure 1, the core network 120 of the telecommunications network 100 comprises a first network function or service 141, and a second network function or service 142, as well as a further network function or service.

Figure 1 primarily shows the simple situation that the user equipment 20 is connected to its home network 100, especially its home public land mobile network, i.e. the telecommunications network 100 represented in Figure 1 might correspond to the home network of the user equipment 20, i.e. the network to which the subscription information in the user equipment 20 relates to. In any case, the user equipment 20 is connected using the access network 110 - in case of a mobile communication network, a radio access network; in case of a fixed line telecommunications network, a (fixed line) access network.

In case this access network 120 does not correspond to (or belong to) the home network or home public land mobile network of the user equipment 20, the access network 110 to which the user equipment 20 is connected is called the visited network or visited public land mobile network of the user equipment 20. In this case, the user equipment 20 is typically also connected to its home network, or, at least, to the core network of its home network. In this latter case, the telecommunications network 100 might correspond to the visited telecommunications network (or visited public land mobile network or visited network); however, in this latter case, it might, alternatively, also be possible that (by means of generalizing the meaning of the telecommunications network 100) the core network 120 represented in Figure 1 corresponds to the core network of the home mobile communication network of the user equipment 20, whereas the radio access network 110 is related to a further core network (not represented in Figure 2) that is part of the visited network or visited public land mobile network (i.e. forms a mobile communication network together with the radio access network 110), and this further core network communicates with the core network 120 of the home telecommunications network (or home public land mobile network or home network) of the user equipment 20.

The present invention provides a method for realizing non-access stratum communication between the user equipment 20 and at least one of a plurality of network functions or services 140 of the telecommunications network 100. This non-access stratum communication involves the first non-access stratum communication link between the user equipment 20 and the first network function or service 141 of the plurality of network functions or services 140, and the second non-access stratum communication link between the user equipment 20 and the second network function or service 142 of the plurality of network functions or services 140. The plurality of network functions or services 140 are able to be of different kinds, i.e. they are able to provide different kinds of network function functionalities but a subset of the plurality of network functions or services 140 can also be of the same kind, and then constitute different instances of the same network function functionality (or of the same kind of network function or service).

In case of a failure of the first non-access stratum communication link (represented, in Figure 1, by means of an "X"), the method comprises at least one of the following steps:
-- the user equipment 20 sends a non-access stratum service degradation indication to one or a plurality of the plurality of network functions or services 140,
-- one or a plurality of the plurality of network functions or services 140 send a non-access stratum service degradation indication to the user equipment 20,
-- one of the plurality of network functions or services 140 sends a non-access stratum service degradation indication to another of the plurality of network functions or services 140,
-- one of the plurality of network functions or services 140 sends a non-access stratum service degradation indication to the access network, especially to the base station entity 111, 112 serving the user equipment 20,
-- the user equipment 20 or a network node or network element of the core network 120 or of the access network 110 is pre-configured with a non-access stratum service degradation indication associated with a given non-access stratum failure event, and uses the pre-configured non-access stratum service degradation indication or parts thereof.

Hence, the solution according to the present invention is based on transmitting a non-access stratum service degradation indication, which allows the user equipment 20 and the network to know under what limitations (what) service(s) can be continued. This is schematically represented in Figure 2, which illustrates the communication between the user equipment 20, an access and mobility management function (AMF), a session management function (SMF), an operations and maintenance function (OAM), and an unspecified other network function or service (140) of the core network 120 in case of a failure situation of - exemplarily - the access and mobility management function:

In a first processing step 201, a normal exemplary disaggregated non-access stratum communication is shown, i.e. without a failure situation, e.g. in the access and mobility management function AMF.

Sub-steps 201-A1 and 201-A2 of the first processing step 201, as part of the first processing step 201, represent the non-access stratum communication between the user equipment 20 and more than one NAS control plane element in the core network 120, i.e. according to the disaggregated non-access stratum paradigm or architecture. In the exemplarily represented embodiment shown in Figure 2, the case of a communication of the user equipment 20 with the access and mobility function AMF and with the session management function SMF is exemplarily represented.

Additionally, sub-steps 201-B1 and 201-B2 of the first processing step 201, represent communication between control plane elements (or network functions or services such as AMF, SMF, etc.) and other network functions or services, e.g. the operations and maintenance (function) (or: Operations, Maintenance and Management (function)) OAM. In the context of the present invention, the operations and maintenance (function) OAM might also refer to (or comprise) a business support system BSS (not represented in Figure 2), an element management system (or: element manager system) EMS (likewise not represented in Figure 2) and/or an infrastructure layer (e.g. a cloud orchestrator such as Kubernetes, k8s) that may be present; for short, these elements or functionalities will be referred to as "OAM"), such that control plane elements are managed and/or monitored.

Additionally, sub-step 201-C of the first processing step 201 represents communication, especially control plane-based (e.g. service-based interface (SBI)-based communication) that may be present as well, such that the control plane elements are able to exchange control plane information.

Additionally, sub-step 201-D of the first processing step 201 represents a similar communication exchange that may be present with additional elements not directly interfacing, via non-access stratum, with the user equipment 20, such as a user plane function (UPF) (likewise not specifically represented in Figure 2).

In a second processing step 202, the access and mobility management function AMF fails - at least from the point of view of the access and mobility management function AMF (i.e. not being able to perform the functionality the user equipment 20 requires). Of course, the same procedure and/or principles are able to be applied to other combinations, i.e. other network functions or services (involved in non-access stratum communication) might (alternatively to the access and mobility management function AMF exemplarily considered here) fail; however, the exemplary representation of communication of Figure 2 focuses on a separation of access and mobility management AM and session management SM (i.e. on disaggregated non-access stratum communication with simultaneous non-access stratum connections of both the access and mobility management function AMF and the session management function SMF), which might be considered the most important situation.

Considered reasons for the failure of the access and mobility management function AMF are:
-- an instance failure (e.g. software crash);
-- cloud platform or hardware failure (e.g. worker node is down or unreachable);
-- instance unreachability;
-- connectivity issue between access and mobility management function AMF and (radio) access network (as the connectivity between the user equipment and the access and mobility management function AMF is routed via the (radio) access network).

In such a situation (of failure, exemplarily, of the access and mobility management function AMF), different alternatives are considered - as part of a third processing step 203 -, so that the failure of the access and mobility management function AMF is registered by elements of the network according to at least one out of the following:
-- an interruption of the NAS communication is detected - in a sub-step 203-A of the third processing step 203 - an by the user equipment 20, e.g. based on timers or based on (lack of) keep-alive communication on the non-access stratum protocol;
-- similarly, the failure is detected (cumulatively or alternatively to sub-step 203-A) by the SMF - in a sub-step 203-B of the third processing step 203 - in which case, a failure of the QUIC, TCP and/or HTTP connection is considered, as well as the timer and/or keep-alive method used in sub-step 203-A;
-- similarly, the failure (i.e. absence of the AMF instance) is detected (cumulatively or alternatively to sub-steps 203-A and/or 203-B and in a sub-step 203-C of the third processing step 203) by the OAM;
-- additionally, failure (i.e. absence of the AMF instance) might be detected (cumulatively or alternatively to sub-steps 203-A, 203-B and/or 203-C) - in a sub-step 203-D of the third processing step 203 - by the infrastructure layer (e.g. cloud/container orchestrator; e.g. by means of the container (hosting the access and mobility management function being crashed), as it is aware of the processes, virtual machines, and/or container running on the platform (i.e. "other layers" of the (mobile) communication network).

In the case the awareness (of the access and mobility management function failure) originates from the operations and maintenance OAM, the session management function SMF (and/or other control plane elements connected via NAS with the user equipment 20) is notified - as part of a fourth processing step 204 -, such that the session management function SMF can be aware of the degraded NAS status by cause of the access and mobility management function AMF failure.

As part of a fifth processing step 205, network elements are sent a NAS service degradation indication, namely one or more of the following:
-- if the failure information is known to the session management function SMF, the session management function SMF (i.e. a CP element with a functioning NAS connection towards the UE) indicates - in a sub-step 205-A of the fifth processing step 205 - to the user equipment 20 that the access and mobility management function AMF (and hence AM functionality), is not available;
-- If the failure information is known to the session management function SMF, the session management function SMF notifies - in a sub-step 205-B of the fifth processing step 205 - other network functions or services of the failure of the access and mobility management function AMF. Not all network functions or services may have direct connection or access to the failure information (e.g. the SM-PCF does not directly communicate with the access and mobility management function AMF); especially according to the present invention, the session management function SMF, in this case, acts as a forwarding element for the failure information;
-- if the failure information is known to the user equipment 20, the user equipment 20 notifies - in a sub-step 205-C of the fifth processing step 205 - the session management function SMF of the AMF failure and hence the inability of the user equipment 20 to perform AM-related functionality.

As part of a sixth processing step 206, degraded service operation applies: Instead of the current (i.e. without a disaggregated non-access stratum communication) "service dies" option, it is possible to maintain service operation under certain conditions.

According to the present invention, especially the following information (or pieces of information) are considered as being contained in or associated with the non-access stratum service degradation indication:
-- the non-access stratum service or services that failed: access and mobility
-- the (non-access stratum) instances or endpoints that failed: the access and mobility management function AMF, especially an identifier associated with the access and mobility management function AMF, such as a GUAMI (Globally Unique AMF Identifier, constructed as <GUAMI> := <MCC> <MNC> <AMF Region ID> <AMF Set ID> <AMF Pointer>, cf. clause 5.9.4 of TS 23.501.). In current systems, the GUAMI of the access and mobility function is employed as an endpoint address addressable by the user equipment. The gNB then resolves the endpoint address to a network address, e.g. internet protocol address, internet protocol address and port, at which the access and mobility function is reachable. Hence, endpoint refers to the information used to resolve the destination of the non-access stratum communication.
-- the functionality that is degraded: access and mobility (in case of another network function or service failure, it could alternatively refer to session management, policy management, especially session-related policy (SM-PCF and AM-PCF can be different PCFs), user equipment-related policy, especially referring to specific sessions, PDU sessions, cells, groups of cells, tracking areas, registration areas)
-- an alternative instance or endpoint to contact: in case an alternative endpoint or alternative access and mobility management function AMF instance is known (e.g. OAM is configured with an alternative instance), including this information allows the user equipment 20 to re-establish the NAS-AM connection towards the alternative instance/endpoint;
-- expected time to recovery: an orchestrator, especially a container orchestrator (containers are much faster to instantiate than virtual machines) can estimate the recovery time of the access and mobility management function AMF instance; this information can be conveyed to the user equipment 20, such that unnecessary retries can be avoided for the duration.

Hence, the solution according to the present invention considers that the non-access stratum service degradation indication arrives to the network elements via the following paths:
-- from user equipment 20 point of view: via another NAS connection e.g., via the SMF or PCF; alternatively, the user equipment 20 realizes this by itself e.g., AM-NAS protocol timer expiration;
-- from session management function SMF (or other network element connected via NAS with the user equipment 20) point of view: via the user equipment 20 notifying the failure; alternatively, the network element realizes this by itself e.g., inter-NF protocol timer expiration; alternatively, it is notified by the operations and maintenance OAM;
-- from "other network functions or services" point of view (not connected via NAS with the user equipment 20): notified by another network function or service, e.g., session management function SMF or other network element connected via non-access stratum with the user equipment 20; alternatively, it is notified by the operations and maintenance OAM.

Degraded service operation after receiving a non-access stratum service degradation indication consists of providing awareness to the 5GS/6G system of the currently applying limitations, so that:
-- service (e.g. data connectivity) can be maintained whenever/wherever possible;
-- situation(s) that would cause the service to be interrupted can be avoided;
-- inform the user of the degraded condition (e.g. so that the user is not surprised if the connection is cut after they move);
-- provide the user the option of adapting its behavior so that service can be maintained (g. the user may choose not to move to maintain connectivity).

An access and mobility management function AMF failure implies that access and mobility functionality cannot be provided. However, and as opposed to currently known systems, it would not imply that a session must be terminated if using a disaggregated NAS approach.

According to the present invention, the objective of the measures taken in degraded service operation is to avoid that a (re-)registration is necessarily triggered, especially a (re-)registration implying mobility (equivalent to "TA update" in 4G; in 5G, it is part of the general registration procedure, albeit with reason "mobility" and not the full parameter set (the user equipment 20 is already authenticated).).

One approach in this respect is - according to the present invention - to achieve awareness of the session management function SMF to adequately manage the AMF failure; this is schematically represented in Figure 3 which illustrates a communication diagram between the user equipment 20, the radio access network 110, and the session management function SMF showing user equipment triggered packet data unit (PDU) session modification as a result of the exemplary failure situation of the access and mobility management function AMF:
-- in a first processing step 211, the user equipment is aware of the non-access stratum service degradation (regarding the access and mobility management function or AM functionality);
-- in a second processing step 212, for an established PDU session, the user equipment 20 informs the responsible session management function SMF of the AMF failure via a non-access stratum service degradation indication;
-- in a third processing step 213, the PDU session can thus be associated with a "mobility-limited" status; while this PDU session can (for now) be maintained, it is known that if a mobility event occurs, the PDU session cannot be maintained;
-- in a fourth processing step 214, the session management function SMF can thus notify that - in case a mobility event were to occur that requires the AMF -, this PDU session will be terminated, as the AMF is not available;
-- in a fifth processing step 215, it is assumed that a handover outside of the TA/RA is triggered, which in normal circumstances would trigger a mobility registration from user equipment 20 side, which results in a sixth processing step 216:
-- in a sub-step 216-A1 of the sixth processing step 216, in order to preemptively end the PDU session because it is known that mobility is not possible, the gNB can, in the handover preparation phase, indicate, to the session management function SMF, of the imminent mobility event (which is known to fail), to which the session management function SMF can preemptively react - in a sub-step 216-A2 of the sixth processing step 216 - by terminating the PDU session with an appropriate cause (degraded AM NAS), or, alternatively (or cumulatively), the user equipment 20 can preemptively terminate - in a sub-step 216-B of the sixth processing step 216 - the PDU session.

According to the present invention, this approach has the advantage of not requiring the mobility registration to fail, which will inevitably take an anomalously long time due to timeout since no endpoint can answer at the other end.

Similarly, it is possible to make the user and/or applications running on the user equipment 20 aware of the service degradation, so that their behavior can adapt based on this knowledge; this is schematically illustrated in Figure 4 which shows a communication diagram between the user equipment 20 and an application (or the user itself) 20' of the user equipment 20 showing the influence of the failure situation on user and/or application behavior:
Again, in a first processing step 221, the user equipment (especially the modem layer of the user equipment 20) is aware of the non-access stratum service degradation (regarding the access and mobility management function or AM functionality); in a second processing step 222, the user equipment 20 (i.e. especially the modem layer of the user equipment, especially a smartphone) signals upper layers (e.g. the high level operating system (HLOS), via AT commands, an API, or the like) of the non-access stratum service degradation.

Especially the following implementations are possible and preferred according to the present invention to provide this information (non-access stratum service degradation) from the modem layer of the user equipment 20:
-- towards the high level operating system (HLOS);
-- via AT commands;
-- via an API, especially towards an application running outside of the user equipment 20;
-- directly towards an application running on the user equipment 20;
-- to the user, especially via a (display-based) notification, pop-up or similar.

In a third processing step 223, the user/application can adapt its behavior. Especially the following behavior adaptations are possible and preferred according to the present invention in order to preserve the service (from user perspective):
-- the user decides to restrict its movement until service is restored; giving the user the knowledge/option to adapt its behavior can let the user make a conscious decision regarding the service availability;
-- The application sets a high buffering (this could, e.g., be applied to cases of downlink traffic, such as video streaming) in order to allow for a service interruption when a mobility event happens.

In the case of failure of the session management function SMF (i.e. instead of a failure of the access and mobility management function AMF), it is necessary to ensure that the user equipment 20 will not try to perform PDU session modification(s). While the data session can further continue as-is without steering, any modification would not be possible. This is schematically shown in Figure 5, which illustrates the communication between the user equipment 20, the access and mobility management function AMF, and a policy control function PCF in case of a failure situation of - exemplarily - the session management function SMF:
In a sub-step 231-A of a first processing step 231, the user equipment 20 is aware of the non-access stratum service degradation, and it is exemplarily assumed, in Figure **4****,** that the non-access stratum service degradation indication arrives, to the policy control function PCF, via an indirect path through the access and mobility management function AMF, using a sub-step 231-B of the first processing step 231 as well as a second processing step 232. A similar path as with the session management function SMF could, alternatively, also be considered using an uplink NAS message for the policy control function PCF; however, the present example (in order to transmit the non-access stratum service degradation indication) according to Figure 4 is to illustrate an indirect path).

In a third processing step 233, the policy/QoS for this user equipment 20 can be set as degraded for the associated PDU sessions, and - in a fourth processing step 234 - a notification is sent (by the policy control function PCF) to the user equipment 20.

In a fifth processing step 235, this results in the user equipment 20 refraining from triggering QoS changes on the PDU sessions.

This avoids the case where a PDU session modification needs to time out in order for the user equipment 20 to have an answer, which can lead to the user equipment 20 dropping the PDU session.

Furthermore, according to the present invention, it is advantageously possible to handle a non-access stratum service degradation by means of using a non-access stratum service-specific timer-based retry - especially of the user equipment 20. Exemplarily, this is schematically represented in Figure 6, which illustrates the communication between the user equipment 20, an access and mobility management function AMF, a session management function SMF, and an operations and maintenance function OAM - in case of a failure situation of, exemplarily, the access and mobility management function AMF - regarding a recovery timer being related to a non-access stratum service failure (or degradation).

This solution, according to the present invention, considers the inclusion of a timer value into the non-access stratum service degradation indication. It is realistic to assume that underlying layers (e.g. the container orchestrator, such as Kubernetes) are designed with specific KPIs (key performance indicators) regarding instance restoration, and as such, it can be assured, or at least predicted with a comparatively high degree of confidence that the instance will be restored in a specific amount of time or at a specific point in time, which is denoted, hereinafter, as "T", or expected time to recovery.

In a first processing step 241, the access and mobility management function AMF failure occurs.

In a second processing step 242, the expected time to recovery ("T") is made available at the user equipment 20 (or, to that matter, at any other network element - however, this is not explicitly represented in Figure 6), either - using sub-steps 242-A1 and 242-A2 of the second processing step 242 - from the core network, via an existing non-access stratum connection, or, alternatively, - using sub-step 242-B - (pre-)configured at the user equipment 20.

In a third processing step 243, the access and mobility management function AMF is restored while the timer (or expected time to recovery) is running (fourth processing step 244); after the timer expiration, the user equipment 20 can then trigger - in a fifth processing step 245 - an AM-NAS (re-)establishment.

According to the present invention, the timer-based approach has the advantage of removing unnecessary signaling during a period of time where it is known with high confidence that the request is going to fail, especially by means of a timeout, which will require the user equipment 20 some time to resolve.

Hence, according to the present invention, it is advantageously possible that a user equipment 20 with two or more differentiated non-access stratum connections between the user equipment 20 and a core network elements within a (mobile) telecommunications network - especially to an access and mobility management function AMF, an session management function SMF and/or a policy control function PCF - wherein the failure of one of the core network elements leads to any of the following:
-- the user equipment 20 sending one or more of the other core network elements a non-access stratum service degradation indication;
-- one or more of the other core network elements sending the user equipment 20 a non-access stratum service degradation indication;
-- one of the other core network elements sending another core network element, especially one of the other core network elements, a non-access stratum service degradation indication;
-- one of the other core network elements sending the (radio) access network, especially a gNB or base station entity, a non-access stratum service degradation indication;
-- or, alternatively or cumulatively, a user equipment 20 and/or core network element and/or (radio) access network element is (pre-)configured with a non-access stratum service degradation indication associated with a given non-access stratum failure event (e.g. failure of AM-NAS, SM-NAS, PCF-NAS).

Especially, the non-access stratum service degradation indication is:
-- sent via the non-access stratum connection between one of the core network elements and the user equipment 20;
-- associated with a specific non-access stratum security context between the user equipment 20 and a given core network element.

Furthermore especially, the non-access stratum service degradation indication contains any of the following:
-- the non-access stratum service or services that failed;
-- the (non-access stratum) instances or endpoints that failed;
-- the functionality that is degraded, especially referring to mobility, session management, policy management, especially session-related policy, user equipment-related policy, especially referring to specific sessions, PDU sessions, cells, groups of cells, tracking areas, registration areas;
-- an alternative instance or endpoint to contact;
-- an expected time to recovery, especially a time span and/or a point in time.

The user equipment 20 and/or other core network elements especially start a reconnection timer based on the expected time to recovery, and, subsequently, attempt a non-access stratum re-establishment with the core network element after the timer expires.

Upon restoration of the non-access stratum service, especially after a new instance is available that can take over, the present invention proposes to use a non-access stratum service restoration indication in a process analogous to the transmission (or communication) of the non-access stratum service degradation indication. Especially, such non-access stratum service restoration indication contains any of the following:
-- the non-access stratum service or services that are restored;
-- the functionality that recovered, especially referring to mobility, session management, policy management, especially session-related policy, UE-related policy, especially referring to specific sessions, PDU sessions, cells, groups of cells, tracking areas, registration areas. It is especially preferred, according to the present invention, that the user equipment 20 indicates the user of the user equipment 20, especially via a notification of the display, of a non-access stratum service degradation, especially in the case that data session(s) cannot be maintained in the case of mobility.

Furthermore, it is advantageously proposed that one of the other core network elements terminate its service including a non-access stratum service degradation indication as a reason, especially in the case of a session management function SMF terminating a PDU session when being notified of an incoming mobility event such as incoming loss of coverage.

## Claims

1. Method for realizing non-access stratum communication between a user equipment (20) and at least one of a plurality of network functions or services (140) of a telecommunications network (100) that comprises, or is associated with, an access network (110) and a core network (120), wherein the access network (110) comprises a plurality of base station entities (111, 112) wherein at least one serving base station entity from the plurality of base station entities serves the user equipment (20),
wherein the non-access stratum communication involves a first non-access stratum communication link between the user equipment (20) and a first network function or service (141) of the plurality of network functions or services (140), and a second non-access stratum communication link between the user equipment (20) and a second network function or service (142) of the plurality of network functions or services (140),
wherein, in case of a failure of the first non-access stratum communication link, the method comprises at least one of the following steps:
-- the user equipment (20) sends a non-access stratum service degradation indication to one or a plurality of the plurality of network functions or services (140),
-- one or a plurality of the plurality of network functions or services (140) send a non-access stratum service degradation indication to the user equipment (20),
-- one of the plurality of network functions or services (140) sends a non-access stratum service degradation indication to another of the plurality of network functions or services (140),
-- one of the plurality of network functions or services (140) sends a non-access stratum service degradation indication to the access network, especially to the at least one serving base station entity (111, 112),
-- the user equipment (20) or a network node or network element of the core network (120) or of the access network (110) is pre-configured with a non-access stratum service degradation indication associated with a given non-access stratum failure event, and uses the pre-configured non-access stratum service degradation indication or parts thereof.

2. Method according to claim 1, wherein, in case of a restoration of the first non-access stratum communication link, the method furthermore comprises at least one of the following steps:
-- the user equipment (20) sends a non-access stratum service restoration indication to one or a plurality of the plurality of network functions or services (140),
-- one or a plurality of the plurality of network functions or services (140) send a non-access stratum service restoration indication to the user equipment (20),
-- one of the plurality of network functions or services (140) sends a non-access stratum service restoration indication to another of the plurality of network functions or services (140),
-- one of the plurality of network functions or services (140) sends a non-access stratum service restoration indication to the access network, especially to the at least one serving base station entity (111, 112),
-- the user equipment (20) or a network node or network element of the core network (120) or of the access network (110) is pre-configured with a non-access stratum service restoration indication associated with a given non-access stratum failure event, and uses the pre-configured non-access stratum service restoration indication or parts thereof.

3. Method according to one of the preceding claims, wherein a further, or third, non-access stratum communication link is established, between the user equipment (20) and a further network function or service of the plurality of network functions or services (140).

4. Method according to claim 3, wherein the non-access stratum service degradation indication
-- is sent via the further non-access stratum communication link,
-- is associated with a specific non-access stratum security context between the user equipment (20) and a predefined network function or service of the plurality of network functions or services (140),
wherein especially the non-access stratum service restoration indication is sent via the further non-access stratum communication link.

5. Method according to one of claims 1 to 3, wherein the non-access stratum service degradation indication
-- is sent via the second non-access stratum communication link,
-- is associated with a specific non-access stratum security context between the user equipment (20) and a predefined network function or service of the plurality of network functions or services (140),
wherein especially the non-access stratum service restoration indication is sent via the first non-access stratum communication link, or via the second non-access stratum communication link.

6. Method according to one of the preceding claims, wherein the non-access stratum service degradation indication comprises at least one out of the following:
-- an indication of a non-access stratum service, or plurality thereof, that failed,
-- an indication of an instance or of an endpoint of a network function or service, especially of an instance or of an endpoint of a non-access stratum network function or service, that failed,
-- an indication of a specific functionality that is degraded, especially referring to mobility, session management, policy management, especially session-related policy, user equipment-related policy, especially referring to specific sessions, PDU sessions, radio cell, groups of radio cells, tracking areas, registration areas, wherein especially the indication of a specific functionality that is degraded refers to a session management function terminating a PDU session when being notified of an incoming mobility event such as incoming loss of coverage,
-- an indication of an alternative instance or endpoint to contact,
-- an indication regarding an expected time to recovery, especially a time-span and/or a point in time.

7. Method according to one of the preceding claims, wherein the non-access stratum service restoration indication comprises at least one out of the following:
-- an indication of a non-access stratum service, or plurality thereof, that is/are, or have been, restored,
-- an indication of an instance or of an endpoint of a network function or service, especially of an instance or of an endpoint of a non-access stratum network function or service, that is/are, or has/have been, restored,
-- an indication of a specific functionality that recovered, especially referring to mobility, session management, policy management, especially session-related policy, user equipment-related policy, especially referring to specific sessions, PDU sessions, radio cell, groups of radio cells, tracking areas, registration areas.

8. Method according to one of the preceding claims, wherein, in case of a failure of the first non-access stratum communication link and/or upon reception of a non-access stratum service degradation indication, the user equipment (20) indicates, to higher, or more user-centric, layers of the user equipment - especially to the user of the user equipment (20), especially via a notification of the display of the user equipment (20) -, a non-access stratum service degradation, especially in case that a data session or multiple data sessions cannot be maintained in the case of mobility.

9. User equipment (20) for realizing non-access stratum communication between the user equipment (20) and at least one of a plurality of network functions or services (140) of a telecommunications network (100) that comprises, or is associated with, an access network (110) and a core network (120), wherein the access network (110) comprises a plurality of base station entities (111, 112) wherein at least one serving base station entity from the plurality of base station entities serves the user equipment (20),
wherein the non-access stratum communication involves a first non-access stratum communication link between the user equipment (20) and a first network function or service (141) of the plurality of network functions or services (140), and a second non-access stratum communication link between the user equipment (20) and a second network function or service (142) of the plurality of network functions or services (140),
wherein, in case of a failure of the first non-access stratum communication link, the user equipment (20) is configured to:
-- send a non-access stratum service degradation indication to one or a plurality of the plurality of network functions or services (140), and/or
-- receive, from one or a plurality of the plurality of network functions or services (140) , a non-access stratum service degradation indication, and/or
-- use a particular non-access stratum service degradation indication or parts thereof, wherein the user equipment is pre-configured with the particular non-access stratum service degradation indication, wherein the particular non-access stratum service degradation indication is associated with a given non-access stratum failure event.

10. System or telecommunications network (100) configured to perform the method according to any one of claims 1 to 8.

11. Program comprising a computer readable program code which, when executed by a system or telecommunications network, to perform the method according to any one of claims 1 to 8.

12. Computer-readable medium comprising the program according to claim 11.

## Patentansprüche

1. Verfahren zum Realisieren einer Nicht-Zugangsschicht-Kommunikation zwischen einem Benutzergerät (20) und mindestens einer von mehreren Netzwerkfunktionen oder -diensten (140) eines Telekommunikationsnetzes (100), das ein Zugangsnetz (110) und ein Kernnetz (120) umfasst oder mit diesen assoziiert ist, wobei das Zugangsnetz (110) mehrere Basisstationseinheiten (111, 112) umfasst, wobei mindestens eine bedienende Basisstationseinheit aus der Mehrzahl von Basisstationseinheiten das Benutzergerät (20) bedient,
wobei die Nicht-Zugangsschicht-Kommunikation eine erste Nicht-Zugangsschicht-Kommunikationsverbindung zwischen dem Benutzergerät (20) und einer ersten Netzwerkfunktion oder einem Dienst (141) der mehreren Netzwerkfunktionen oder -dienste (140) sowie eine zweite Nicht-Zugangsschicht-Kommunikationsverbindung zwischen dem Benutzergerät (20) und einer zweiten Netzwerkfunktion oder einem Dienst (142) der mehreren Netzwerkfunktionen oder -dienste (140) umfasst,
wobei im Falle eines Ausfalls der ersten Nicht-Zugangsschicht-Kommunikationsverbindung das Verfahren mindestens einen der folgenden Schritte umfasst:
-- das Benutzergerät (20) sendet eine Nicht-Zugangsschicht-Dienstverschlechterungsanzeige an eine oder mehrere der mehreren Netzwerkfunktionen oder -dienste (140),
-- eine oder mehrere der mehreren Netzwerkfunktionen oder -dienste (140) senden eine Nicht-Zugangsschicht-Dienstverschlechterungsanzeige an das Benutzergerät (20),
-- eine der mehreren Netzwerkfunktionen oder -dienste (140) sendet eine Nicht-Zugangsschicht-Dienstverschlechterungsanzeige an eine andere der mehreren Netzwerkfunktionen oder -dienste (140),
-- eine der mehreren Netzwerkfunktionen oder -dienste (140) sendet eine Nicht-Zugangsschicht-Dienstverschlechterungsanzeige an das Zugangsnetz, insbesondere an die mindestens eine bedienende Basisstationseinheit (111, 112),
-- das Benutzergerät (20) oder ein Netzwerkknoten oder ein Netzwerkelement des Kernnetzes (120) oder des Zugangsnetzes (110) ist mit einer Nicht-Zugangsschicht-Dienstverschlechterungsanzeige, die einem gegebenen Nicht-Zugangsschicht-Ausfallereignis zugeordnet ist, vorkonfiguriert und verwendet die vorkonfigurierte Nicht-Zugangsschicht-Dienstverschlechterungsanzeige oder Teile davon.

2. Verfahren nach Anspruch 1, wobei im Falle einer Wiederherstellung der ersten Nicht-Zugangsschicht-Kommunikationsverbindung das Verfahren ferner mindestens einen der folgenden Schritte umfasst:
-- das Benutzergerät (20) sendet eine Nicht-Zugangsschicht-Dienstwiederherstellungsanzeige an eine oder mehrere der mehreren Netzwerkfunktionen oder -dienste (140),
-- eine oder mehrere der mehreren Netzwerkfunktionen oder -dienste (140) senden eine Nicht-Zugangsschicht-Dienstwiederherstellungsanzeige an das Benutzergerät (20),
-- eine der mehreren Netzwerkfunktionen oder -dienste (140) sendet eine Nicht-Zugangsschicht-Dienstwiederherstellungsanzeige an eine andere der mehreren Netzwerkfunktionen oder -dienste (140),
-- eine der mehreren Netzwerkfunktionen oder -dienste (140) sendet eine Nicht-Zugangsschicht-Dienstwiederherstellungsanzeige an das Zugangsnetz, insbesondere an die mindestens eine bedienende Basisstationseinheit (111, 112),
-- das Benutzergerät (20) oder ein Netzwerkknoten oder ein Netzwerkelement des Kernnetzes (120) oder des Zugangsnetzes (110) ist mit einer Nicht-Zugangsschicht-Dienstwiederherstellungsanzeige, die einem gegebenen Nicht-Zugangsschicht-Ausfallereignis zugeordnet ist, vorkonfiguriert und verwendet die vorkonfigurierte Nicht-Zugangsschicht-Dienstwiederherstellungsanzeige oder Teile davon.

3. Verfahren nach einem der vorhergehenden Ansprüche, wobei eine weitere, oder dritte, Nicht-Zugangsschicht-Kommunikationsverbindung zwischen dem Benutzergerät (20) und einer weiteren Netzwerkfunktion oder einem Dienst der mehreren Netzwerkfunktionen oder - dienste (140) hergestellt wird.

4. Verfahren nach Anspruch 3, wobei die Nicht-Zugangsschicht-Dienstverschlechterungsanzeige
-- über die weitere Nicht-Zugangsschicht-Kommunikationsverbindung gesendet wird,
-- einem spezifischen Nicht-Zugangsschicht-Sicherheitskontext zwischen dem Benutzergerät (20) und einer vordefinierten Netzwerkfunktion oder einem Dienst der mehreren Netzwerkfunktionen oder -dienste (140) zugeordnet ist,
wobei insbesondere die Nicht-Zugangsschicht-Dienstwiederherstellungsanzeige über die weitere Nicht-Zugangsschicht-Kommunikationsverbindung gesendet wird.

5. Verfahren nach einem der Ansprüche 1 bis 3, wobei die Nicht-Zugangsschicht-Dienstverschlechterungsanzeige
-- über die zweite Nicht-Zugangsschicht-Kommunikationsverbindung gesendet wird,
-- einem spezifischen Nicht-Zugangsschicht-Sicherheitskontext zwischen dem Benutzergerät (20) und einer vordefinierten Netzwerkfunktion oder einem Dienst der mehreren Netzwerkfunktionen oder -dienste (140) zugeordnet ist,
wobei insbesondere die Nicht-Zugangsschicht-Dienstwiederherstellungsanzeige über die erste Nicht-Zugangsschicht-Kommunikationsverbindung oder über die zweite Nicht-Zugangsschicht-Kommunikationsverbindung gesendet wird.

6. Verfahren nach einem der vorhergehenden Ansprüche, wobei die Nicht-Zugangsschicht-Dienstverschlechterungsanzeige mindestens eines der Folgenden umfasst:
-- eine Angabe eines Nicht-Zugangsschicht-Dienstes, oder mehrerer davon, der/die ausgefallen ist/sind,
-- eine Angabe einer Instanz oder eines Endpunkts einer Netzwerkfunktion oder eines Dienstes, insbesondere einer Instanz oder eines Endpunkts einer Nicht-Zugangsschicht-Netzwerkfunktion oder eines Nicht-Zugangsschicht-Dienstes, der/die ausgefallen ist/sind,
-- eine Angabe einer bestimmten Funktionalität, die beeinträchtigt ist, insbesondere bezogen auf Mobilität, Sitzungsverwaltung, Richtlinienverwaltung, insbesondere sitzungsbezogene Richtlinien, benutzergerätebezogene Richtlinien, insbesondere bezogen auf bestimmte Sitzungen, PDU-Sitzungen, Funkzelle, Gruppen von Funkzellen, Tracking-Areas, Registrierungsbereiche, wobei insbesondere die Angabe einer bestimmten Funktionalität, die beeinträchtigt ist, sich darauf bezieht, dass eine Sitzungsverwaltungsfunktion eine PDU-Sitzung beendet, wenn sie über ein eintreffendes Mobilitätsereignis, wie z. B. einen eintreffenden Abdeckungsverlust, benachrichtigt wird,
-- eine Angabe einer alternativen zu kontaktierenden Instanz oder eines alternativen zu kontaktierenden Endpunkts,
-- eine Angabe bezüglich einer erwarteten Zeit bis zur Wiederherstellung, insbesondere einer Zeitspanne und/oder eines Zeitpunkts.

7. Verfahren nach einem der vorhergehenden Ansprüche, wobei die Nicht-Zugangsschicht-Dienstwiederherstellungsanzeige mindestens eines der Folgenden umfasst:
-- eine Angabe eines Nicht-Zugangsschicht-Dienstes, oder mehrerer davon, der/die wiederhergestellt ist/sind oder wurde/wurden,
-- eine Angabe einer Instanz oder eines Endpunkts einer Netzwerkfunktion oder eines Dienstes, insbesondere einer Instanz oder eines Endpunkts einer Nicht-Zugangsschicht-Netzwerkfunktion oder eines Nicht-Zugangsschicht-Dienstes, der/die wiederhergestellt ist/sind oder wurde/wurden,
-- eine Angabe einer bestimmten Funktionalität, die wiederhergestellt wurde, insbesondere bezogen auf Mobilität, Sitzungsverwaltung, Richtlinienverwaltung, insbesondere sitzungsbezogene Richtlinien, benutzergerätebezogene Richtlinien, insbesondere bezogen auf bestimmte Sitzungen, PDU-Sitzungen, Funkzelle, Gruppen von Funkzellen, Tracking-Areas, Registrierungsbereiche.

8. Verfahren nach einem der vorhergehenden Ansprüche, wobei im Falle eines Ausfalls der ersten Nicht-Zugangsschicht-Kommunikationsverbindung und/oder beim Empfang einer Nicht-Zugangsschicht-Dienstverschlechterungsanzeige das Benutzergerät (20) höheren, oder stärker nutzerzentrierten, Schichten des Benutzergeräts - insbesondere dem Benutzer des Benutzergeräts (20), insbesondere über eine Benachrichtigung auf der Anzeige des Benutzergeräts (20) - eine Nicht-Zugangsschicht-Dienstverschlechterung anzeigt, insbesondere für den Fall, dass eine Datensitzung oder mehrere Datensitzungen im Falle von Mobilität nicht aufrechterhalten werden können.

9. Benutzergerät (20) zum Realisieren einer Nicht-Zugangsschicht-Kommunikation zwischen dem Benutzergerät (20) und mindestens einer von mehreren Netzwerkfunktionen oder - diensten (140) eines Telekommunikationsnetzes (100), das ein Zugangsnetz (110) und ein Kernnetz (120) umfasst oder mit diesen assoziiert ist, wobei das Zugangsnetz (110) mehrere Basisstationseinheiten (111, 112) umfasst, wobei mindestens eine bedienende Basisstationseinheit aus der Mehrzahl von Basisstationseinheiten das Benutzergerät (20) bedient,
wobei die Nicht-Zugangsschicht-Kommunikation eine erste Nicht-Zugangsschicht-Kommunikationsverbindung zwischen dem Benutzergerät (20) und einer ersten Netzwerkfunktion oder einem Dienst (141) der mehreren Netzwerkfunktionen oder -dienste (140) sowie eine zweite Nicht-Zugangsschicht-Kommunikationsverbindung zwischen dem Benutzergerät (20) und einer zweiten Netzwerkfunktion oder einem Dienst (142) der mehreren Netzwerkfunktionen oder -dienste (140) umfasst,
wobei das Benutzergerät (20) im Falle eines Ausfalls der ersten Nicht-Zugangsschicht-Kommunikationsverbindung dazu ausgebildet ist:
-- eine Nicht-Zugangsschicht-Dienstverschlechterungsanzeige an eine oder mehrere der mehreren Netzwerkfunktionen oder -dienste (140) zu senden, und/oder
-- von einer oder mehreren der mehreren Netzwerkfunktionen oder -dienste (140) eine Nicht-Zugangsschicht-Dienstverschlechterungsanzeige zu empfangen, und/oder
-- eine bestimmte Nicht-Zugangsschicht-Dienstverschlechterungsanzeige oder Teile davon zu verwenden, wobei das Benutzergerät mit der bestimmten Nicht-Zugangsschicht-Dienstverschlechterungsanzeige vorkonfiguriert ist, wobei die bestimmte Nicht-Zugangsschicht-Dienstverschlechterungsanzeige einem gegebenen Nicht-Zugangsschicht-Ausfallereignis zugeordnet ist.

10. System oder Telekommunikationsnetz (100), das dazu ausgebildet ist, das Verfahren nach einem der Ansprüche 1 bis 8 durchzuführen.

11. Programm, umfassend einen computerlesbaren Programmcode, der, wenn er von einem System oder einem Telekommunikationsnetz ausgeführt wird, bewirkt, dass das System oder Telekommunikationsnetz das Verfahren nach einem der Ansprüche 1 bis 8 durchführt.

12. Computerlesbares Medium, umfassend das Programm nach Anspruch 11.

## Revendications

1. Procédé pour réaliser une communication de strate de non-accès entre un équipement utilisateur (20) et au moins une d'une pluralité de fonctions de réseau ou services (140) d'un réseau de télécommunications (100) qui comprend, ou est associé à, un réseau d'accès (110) et un réseau cœur (120), dans lequel le réseau d'accès (110) comprend une pluralité d'entités de station de base (111, 112), dans lequel au moins une entité de station de base desservante parmi la pluralité d'entités de station de base dessert l'équipement utilisateur (20),
dans lequel la communication de strate de non-accès implique une première liaison de communication de strate de non-accès entre l'équipement utilisateur (20) et une première fonction de réseau ou service (141) de la pluralité de fonctions de réseau ou services (140), et une deuxième liaison de communication de strate de non-accès entre l'équipement utilisateur (20) et une deuxième fonction de réseau ou service (142) de la pluralité de fonctions de réseau ou services (140),
dans lequel, en cas de défaillance de la première liaison de communication de strate de non-accès, le procédé comprend au moins l'une des étapes suivantes :
- - l'équipement utilisateur (20) envoie une indication de dégradation de service de strate de non-accès à une ou plusieurs de la pluralité de fonctions de réseau ou services (140),
- - une ou plusieurs de la pluralité de fonctions de réseau ou services (140) envoient une indication de dégradation de service de strate de non-accès à l'équipement utilisateur (20),
- - l'une de la pluralité de fonctions de réseau ou services (140) envoie une indication de dégradation de service de strate de non-accès à une autre de la pluralité de fonctions de réseau ou services (140),
- - l'une de la pluralité de fonctions de réseau ou services (140) envoie une indication de dégradation de service de strate de non-accès au réseau d'accès, notamment à ladite au moins une entité de station de base desservante (111, 112),
- - l'équipement utilisateur (20) ou un nœud de réseau ou un élément de réseau du réseau cœur (120) ou du réseau d'accès (110) est préconfiguré avec une indication de dégradation de service de strate de non-accès associée à un événement de défaillance de strate de non-accès donné, et utilise l'indication de dégradation de service de strate de non-accès préconfigurée ou des parties de celle-ci.

2. Procédé selon la revendication 1, dans lequel, en cas de rétablissement de la première liaison de communication de strate de non-accès, le procédé comprend en outre au moins l'une des étapes suivantes :
- - l'équipement utilisateur (20) envoie une indication de rétablissement de service de strate de non-accès à une ou plusieurs de la pluralité de fonctions de réseau ou services (140),
- - une ou plusieurs de la pluralité de fonctions de réseau ou services (140) envoient une indication de rétablissement de service de strate de non-accès à l'équipement utilisateur (20),
- - l'une de la pluralité de fonctions de réseau ou services (140) envoie une indication de rétablissement de service de strate de non-accès à une autre de la pluralité de fonctions de réseau ou services (140),
- - l'une de la pluralité de fonctions de réseau ou services (140) envoie une indication de rétablissement de service de strate de non-accès au réseau d'accès, notamment à ladite au moins une entité de station de base desservante (111, 112),
- - l'équipement utilisateur (20) ou un nœud de réseau ou un élément de réseau du réseau cœur (120) ou du réseau d'accès (110) est préconfiguré avec une indication de rétablissement de service de strate de non-accès associée à un événement de défaillance de strate de non-accès donné, et utilise l'indication de rétablissement de service de strate de non-accès préconfigurée ou des parties de celle-ci.

3. Procédé selon l'une des revendications précédentes, dans lequel une liaison de communication de strate de non-accès supplémentaire, ou troisième, est établie entre l'équipement utilisateur (20) et une fonction de réseau ou service supplémentaire de la pluralité de fonctions de réseau ou services (140).

4. Procédé selon la revendication 3, dans lequel l'indication de dégradation de service de strate de non-accès
- - est envoyée via la liaison de communication de strate de non-accès supplémentaire,
- - est associée à un contexte de sécurité de strate de non-accès spécifique entre l'équipement utilisateur (20) et une fonction de réseau ou service prédéfini de la pluralité de fonctions de réseau ou services (140),
dans lequel, notamment, l'indication de rétablissement de service de strate de non-accès est envoyée via la liaison de communication de strate de non-accès supplémentaire.

5. Procédé selon l'une des revendications 1 à 3, dans lequel l'indication de dégradation de service de strate de non-accès
- - est envoyée via la deuxième liaison de communication de strate de non-accès,
- - est associée à un contexte de sécurité de strate de non-accès spécifique entre l'équipement utilisateur (20) et une fonction de réseau ou service prédéfini de la pluralité de fonctions de réseau ou services (140),
dans lequel, notamment, l'indication de rétablissement de service de strate de non-accès est envoyée via la première liaison de communication de strate de non-accès, ou via la deuxième liaison de communication de strate de non-accès.

6. Procédé selon l'une des revendications précédentes, dans lequel l'indication de dégradation de service de strate de non-accès comprend au moins l'un des éléments suivants :
- - une indication d'un service de strate de non-accès, ou d'une pluralité de ceux-ci, qui a/ont échoué,
- - une indication d'une instance ou d'un point d'extrémité d'une fonction de réseau ou service, notamment d'une instance ou d'un point d'extrémité d'une fonction de réseau ou service de strate de non-accès, qui a/ont échoué,
- - une indication d'une fonctionnalité spécifique qui est dégradée, se rapportant notamment à la mobilité, à la gestion de session, à la gestion de politique, notamment à une politique liée à la session, à une politique liée à l'équipement utilisateur, se rapportant notamment à des sessions spécifiques, des sessions PDU, une cellule radio, des groupes de cellules radio, des zones de suivi, des zones d'enregistrement, dans lequel notamment l'indication d'une fonctionnalité spécifique qui est dégradée se rapporte à une fonction de gestion de session mettant fin à une session PDU lorsqu'elle est informée d'un événement de mobilité entrant tel qu'une perte de couverture entrante,
- - une indication d'une instance alternative ou d'un point d'extrémité alternatif à contacter,
- - une indication relative à un temps de récupération attendu, notamment une durée et/ou un instant.

7. Procédé selon l'une des revendications précédentes, dans lequel l'indication de rétablissement de service de strate de non-accès comprend au moins l'un des éléments suivants :
- - une indication d'un service de strate de non-accès, ou d'une pluralité de ceux-ci, qui est/sont, ou a/ont été, rétabli(s),
- - une indication d'une instance ou d'un point d'extrémité d'une fonction de réseau ou service, notamment d'une instance ou d'un point d'extrémité d'une fonction de réseau ou service de strate de non-accès, qui est/sont, ou a/ont été, rétabli(s),
- - une indication d'une fonctionnalité spécifique qui a été rétablie, se rapportant notamment à la mobilité, à la gestion de session, à la gestion de politique, notamment à une politique liée à la session, à une politique liée à l'équipement utilisateur, se rapportant notamment à des sessions spécifiques, des sessions PDU, une cellule radio, des groupes de cellules radio, des zones de suivi, des zones d'enregistrement.

8. Procédé selon l'une des revendications précédentes, dans lequel, en cas de défaillance de la première liaison de communication de strate de non-accès et/ou lors de la réception d'une indication de dégradation de service de strate de non-accès, l'équipement utilisateur (20) indique, à des couches supérieures, ou plus centrées sur l'utilisateur, de l'équipement utilisateur - notamment à l'utilisateur de l'équipement utilisateur (20), notamment par le biais d'une notification sur l'écran de l'équipement utilisateur (20) -, une dégradation de service de strate de non-accès, notamment dans le cas où une session de données ou plusieurs sessions de données ne peuvent pas être maintenues en cas de mobilité.

9. Équipement utilisateur (20) pour réaliser une communication de strate de non-accès entre l'équipement utilisateur (20) et au moins une d'une pluralité de fonctions de réseau ou services (140) d'un réseau de télécommunications (100) qui comprend, ou est associé à, un réseau d'accès (110) et un réseau cœur (120), dans lequel le réseau d'accès (110) comprend une pluralité d'entités de station de base (111, 112), dans lequel au moins une entité de station de base desservante parmi la pluralité d'entités de station de base dessert l'équipement utilisateur (20),
dans lequel la communication de strate de non-accès implique une première liaison de communication de strate de non-accès entre l'équipement utilisateur (20) et une première fonction de réseau ou service (141) de la pluralité de fonctions de réseau ou services (140), et une deuxième liaison de communication de strate de non-accès entre l'équipement utilisateur (20) et une deuxième fonction de réseau ou service (142) de la pluralité de fonctions de réseau ou services (140),
dans lequel, en cas de défaillance de la première liaison de communication de strate de non-accès, l'équipement utilisateur (20) est configuré pour :
- - envoyer une indication de dégradation de service de strate de non-accès à une ou plusieurs de la pluralité de fonctions de réseau ou services (140), et/ou
- - recevoir, en provenance d'une ou plusieurs de la pluralité de fonctions de réseau ou services (140), une indication de dégradation de service de strate de non-accès, et/ou
- - utiliser une indication de dégradation de service de strate de non-accès particulière ou des parties de celle-ci, dans lequel l'équipement utilisateur est préconfiguré avec l'indication de dégradation de service de strate de non-accès particulière, dans lequel l'indication de dégradation de service de strate de non-accès particulière est associée à un événement de défaillance de strate de non-accès donné.

10. Système ou réseau de télécommunications (100) configuré pour mettre en œuvre le procédé selon l'une quelconque des revendications 1 à 8.

11. Programme comprenant un code de programme lisible par ordinateur qui, lorsqu'il est exécuté par un système ou réseau de télécommunications, amène le système ou le réseau de télécommunications à mettre en œuvre le procédé selon l'une quelconque des revendications 1 à 8.

12. Support lisible par ordinateur comprenant le programme selon la revendication 11.
